# FASCICULE DE BREVET EUROPEEN

(11) **EP 4 090 528 B1**
(45) Date de publication et mention de la délivrance du brevet: **18.11.2026**
(21) Numéro de dépôt: 21704861.0
(22) Date de dépôt: 11.01.2021
(51) Int. Cl.: B32B 3/08, B32B 3/26, B32B 17/10, B60J 1/17

(54) **VITRAGE FEUILLETÉ POUR UN VÉHICULE AUTOMOBILE, NOTAMMENT UN VITRAGE LATÉRAL POUR UNE PORTIÈRE DE VÉHICULE**
VERBUNDVERGLASUNG FÜR EIN KRAFTFAHRZEUG, INSBESONDERE SEITENVERGLASUNG FÜR EINE FAHRZEUGTÜR
LAMINATED GLAZING FOR A MOTOR VEHICLE, IN PARTICULAR LATERAL GLAZING FOR A VEHICLE DOOR

(30) Priorité: 16.01.2020 FR 2000390
(43) Date de publication de la demande: 23.11.2022
(73) Titulaire: Saint-Gobain Sekurit France, 60150 Thourotte (FR)
(72) Inventeur: BERTHE, Frédéric, 60170 CAMBRONNE LES RIBECOURT (FR); DROUET, Xavier, 95670 MARLY LA VILLE (FR)
(74) Mandataire: SAINT-GOBAIN SEKURIT FRANCE
(86) Numéro de dépôt international: PCT/FR2021/050040
(87) Numéro de publication internationale: WO 2021/144524

(56) Documents cités:
- WO-A1-2018/178882
- DE-U1- 202017 006 786

## Description

L'invention concerne un vitrage feuilleté pour un véhicule automobile, notamment un vitrage latéral pour une portière de véhicule.

L'invention concerne plus particulièrement un vitrage feuilleté pour un véhicule automobile, notamment un vitrage latéral destiné à être monté coulissant dans une portière du véhicule, ledit vitrage comportant au moins une feuille de verre extérieure et une feuille de verre intérieure assemblées par un intercalaire qui comporte au moins une feuille en matériau polymère, dans lequel une zone visible et une zone non visible du vitrage s'étendent de part et d'autre d'une limite de visibilité et comportant, dans ladite zone non visible située en dessous de la limite de visibilité, d'une part au moins une partie de fixation qui comporte au moins un trou de fixation destiné à recevoir des moyens de liaison avec un dispositif d'entraînement dudit vitrage et, d'autre part, au moins un insert qui comporte un orifice configuré pour être aligné avec ledit trou de fixation.

L'invention sera plus particulièrement décrite pour une utilisation dans le domaine automobile en tant que vitrage latéral monté coulissant dans la carrosserie d'un véhicule automobile, en particulier dans une portière du véhicule, mais n'est toutefois pas limitée à une telle application.

### Arrière-plan technique

Les vitrages automobiles sont sujets à des performances toujours plus exigeantes et souvent difficilement conciliables, tel est notamment le cas des vitrages latéraux.

Dans un véhicule automobile, les vitrages latéraux sont généralement montés coulissant par l'intermédiaire d'un dispositif d'entraînement dans les portières du véhicule.

Dans certains véhicules et pour des raisons notamment esthétiques, les portières ne comportent pas de cadre autour du vitrage latéral, à l'instar de certains cabriolets, ce qui participe à accroître les exigences de performance du vitrage, en particulier sur le plan de la sécurité en cas de chocs.

De telles portières sans cadre sont parfois désignées dans le domaine automobile par le terme anglais *« frameless ».*

Le dispositif d'entraînement du vitrage latéral est commandé sélectivement par l'intermédiaire d'un organe, tel qu'une manivelle ou un bouton, pour déplacer le vitrage en hauteur par rapport à la portière, respectivement entre une position de fermée et au moins une position ouverte.

Les vitrages latéraux d'un véhicule sont habituellement constitués de feuilles de verre monolithiques plus ou moins épaisses.

Par comparaison avec un tel vitrage monolithique, un vitrage feuilleté comporte au moins une feuille de verre extérieure et une feuille de verre intérieure assemblées par un intercalaire comportant au moins une feuille en matériau polymère, telle qu'au moins une feuille de polyvinylbutyral (PVB).

Les constructeurs automobiles souhaitent, notamment pour les véhicules les plus sophistiqués, disposer de vitrages latéraux offrant les meilleures propriétés existantes telles que des qualités d'atténuation acoustique, de résistance contre une effraction, des propriétés athermiques, etc.

C'est l'une des raisons pour lesquelles, les vitrages feuilletés sont de plus en plus utilisés comme vitrages latéraux d'un véhicule automobile. Toutefois, l'utilisation de vitrages feuilletés n'est pas sans poser des problèmes.

L'un des problèmes est notamment de pouvoir garantir que le vitrage feuilleté reste attaché au dispositif d'entraînement afin de satisfaire aux exigences de sécurité, en particulier en cas de chocs et cela y compris lorsque la portière ne comporte pas de cadre, c'est-à-dire est du type *« frameless ».*

Pour assurer la liaison d'un vitrage latéral avec le dispositif d'entraînement logé dans la portière, on distingue généralement dans l'art antérieur un premier type de liaison mettant en œuvre un assemblage par pincement et un deuxième type de liaison mettant en œuvre un assemblage par vissage.

Dans le cas d'une liaison par pincement, les moyens de liaison comportent par exemple une pièce ou une paire de pièces de liaison en « Y », notamment fixées par collage au vitrage.

Chaque pièce de liaison (appelée *« holder »* en anglais) coopère avec chacune des faces du vitrage, respectivement interne et externe, ladite pièce de liaison étant agencée au voisinage du bord inférieur situé en dessous de la limite de visibilité, soit dans la zone non visible dissimulée dans la portière, et cela afin de lier en déplacement le vitrage latéral au dispositif d'entraînement.

Ce premier type de liaison par pincement est notamment utilisé pour les vitrages feuilletés. Toutefois, ce premier type de liaison présente l'inconvénient, pour certaines applications, d'un encombrement trop important car celui de la pièce de liaison en saillie s'ajoute à l'épaisseur du vitrage.

De plus, la pièce de liaison s'étend aussi en hauteur, la zone de collage de ladite pièce de liaison sur le verre se superposant à la partie de fixation du vitrage avec le dispositif d'entrainement.

Par ailleurs, la standardisation du dispositif d'entraînement est parfois recherchée par les constructeurs automobiles afin de pouvoir indifféremment monter dans la portière d'un véhicule, notamment d'un même modèle, un vitrage latéral de type monolithique ou de type feuilleté.

C'est l'une des raisons pour lesquelles, on a en outre recherché à appliquer à des vitrages latéraux de type feuilleté le deuxième type de liaison par vissage, généralement utilisé avec des vitrages latéraux de type monolithique, et nécessitant la présence d'au moins un trou de fixation dans le vitrage.

Dans le cas d'une telle liaison par vissage, le vitrage comporte au moins une partie de fixation, parfois deux parties de fixation distinctes selon le vitrage, qui sont réalisées dans la zone non visible située en dessous de la limite de visibilité.

La ou les parties de fixation comportent au moins un trou de fixation ménagé à travers le vitrage. Le trou de fixation débouchant sur les deux faces du vitrage est destiné à recevoir des moyens de liaison, lesdits moyens de liaison comportant généralement un axe relié au dispositif d'entraînement, par exemple une tige filetée.

Le vitrage feuilleté selon la présente invention est destiné à être utilisé avec une telle liaison par vissage et comporte donc à cet effet au moins une partie de fixation comportant un ou des trous de fixation configurés pour recevoir des moyens de liaison avec un dispositif d'entraînement du vitrage.

Dans les vitrages feuilletés utilisés comme vitrages latéraux, on distingue un type de vitrage particulier dit « asymétrique » qui se caractérise par le fait qu'au moins la feuille de verre intérieure, plus courte, ne recouvre pas la ou les autres feuilles du vitrage au niveau de la partie de fixation.

Ainsi, un vitrage asymétrique comporte une feuille de verre intérieure qui n'est pas traversée par des moyens de liaison entre le vitrage et le dispositif d'entraînement puisque ladite feuille de verre intérieure ne comprend aucun trou de fixation.

Par conséquent et sur le plan mécanique, la feuille de verre intérieure d'un tel vitrage asymétrique se trouve liée au dispositif d'entraînement uniquement par l'intermédiaire des autres feuilles du vitrage, c'est à dire indirectement via l'intercalaire du fait de l'assemblage des feuilles constitutives du vitrage feuilleté.

Un tel vitrage feuilleté asymétrique est donc attaché au dispositif d'entraînement essentiellement par la feuille de verre extérieure. Cependant, en cas de chocs, la partie de fixation du vitrage subit des sollicitations à même d'en provoquer la casse autour du trou de fixation et ce faisant de compromettre la retenue du vitrage par l'intermédiaire des moyens de liaison.

En effet, cela constitue en outre un problème en matière de sécurité qui va être plus particulièrement expliqué ci-après à travers différents exemples de vitrage feuilleté de type asymétrique selon l'art antérieur.

On connaît dans l'art antérieur différents exemples de réalisation d'un vitrage feuilleté de type asymétrique comportant au moins une partie de fixation formée, à l'exclusion de la feuille de verre intérieure, par tout ou partie des autres feuilles constitutives du vitrage.

Le document WO-2014/029605 (au nom de AGC) illustre un premier exemple de réalisation dans lequel le vitrage feuilleté de type asymétrique comporte, dans sa zone non visible, une unique partie de fixation avec un seul trou de fixation.

Dans ce premier exemple, la partie de fixation du vitrage est de surcroît formée uniquement par la feuille en verre extérieure, non recouverte au niveau du trou de fixation par l'intercalaire (ni par la feuille intérieure en verre).

Ainsi, le vitrage asymétrique selon ce premier exemple se caractérise par le fait que l'intercalaire et la feuille en verre intérieure sont tous deux plus courts que la feuille en verre extérieure, ladite feuille extérieure comportant centralement une excroissance pour former la partie de fixation du vitrage.

Un vitrage feuilleté selon ce premier exemple de réalisation ne donne pas satisfaction sur le plan de la sécurité pour une application automobile, en particulier en tant que vitrage latéral, pour les raisons expliquées ci-après.

En effet, la partie de fixation formée par la feuille en verre extérieure est susceptible, par exemple lors de chocs survenant pendant un accident, de se casser, notamment au niveau de la partie de fixation et plus précisément du trou de fixation.

Par conséquent, si le vitrage n'est plus attaché, relié au dispositif d'entraînement, le risque sur le plan de la sécurité est que le vitrage (qui n'est plus retenu) ne se transforme alors en un projectile à même de provoquer des dommages, notamment mais non exclusivement aux personnes se trouvant à proximité.

De plus, il est à noter que ce risque est encore accru lorsque le vitrage est utilisé comme vitrage latéral dans une portière de véhicule automobile ne comportant pas de cadre car aucun cadre n'est alors susceptible de retenir le vitrage.

De surcroît, un tel vitrage feuilleté s'avère également peu adapté pour une utilisation comme vitrage latéral dans une telle portière sans cadre *(« frameless* ») et cela en raison des sollicitations mécaniques particulières, telles que les efforts survenant lors d'une manœuvre de claquement de la portière en vue de sa fermeture, pouvant aussi conduire à une rupture au niveau du trou de fixation.

Le document WO-2018/178882 (au nom de AGP) illustre un deuxième exemple de réalisation dans lequel le vitrage feuilleté comporte, dans sa zone non visible, une partie de fixation comportant deux trous de fixation avant et arrière lorsque le vitrage est destiné à être utilisé comme vitrage latéral.

Dans ce deuxième exemple, la partie de fixation du vitrage est formée par la feuille en verre extérieure et par une feuille en matière thermoplastique formant l'intercalaire, typiquement une feuille en polyvinylbutyral (PVB).

Dans ce vitrage feuilleté asymétrique, la partie de fixation du vitrage n'est pas recouverte par la feuille en verre intérieure qui, comportant une découpe, est plus courte en hauteur que les autres feuilles du vitrage et ne s'étend donc pas au niveau des trous de fixation.

Par comparaison avec le premier exemple, la résistance de la partie de fixation est améliorée par l'adjonction de la feuille intercalaire à la feuille de verre extérieure et par celle d'un insert.

En effet, dans ce deuxième exemple, le vitrage comporte un insert muni d'un trou qui est aligné avec le trou de fixation ménagé à travers la feuille en verre extérieure et la feuille intercalaire en matériau polymère. L'insert est agencé au niveau de la découpe, c'est-à-dire en dessous de la feuille en verre intérieure.

Selon les exemples de réalisation, l'insert est fixé à la feuille en verre extérieure par l'intermédiaire de la feuille intercalaire en matériau polymère (interposée entre les deux feuilles extérieure et intérieure) ou en variante par collage au moyen d'un adhésif.

L'amélioration obtenue sur le plan de la sécurité en cas de casse de la partie de fixation demeure toutefois insuffisante car notamment limitée à la résistance au déchirement de la feuille intercalaire réalisée en polyvinylbutyral (PVB).

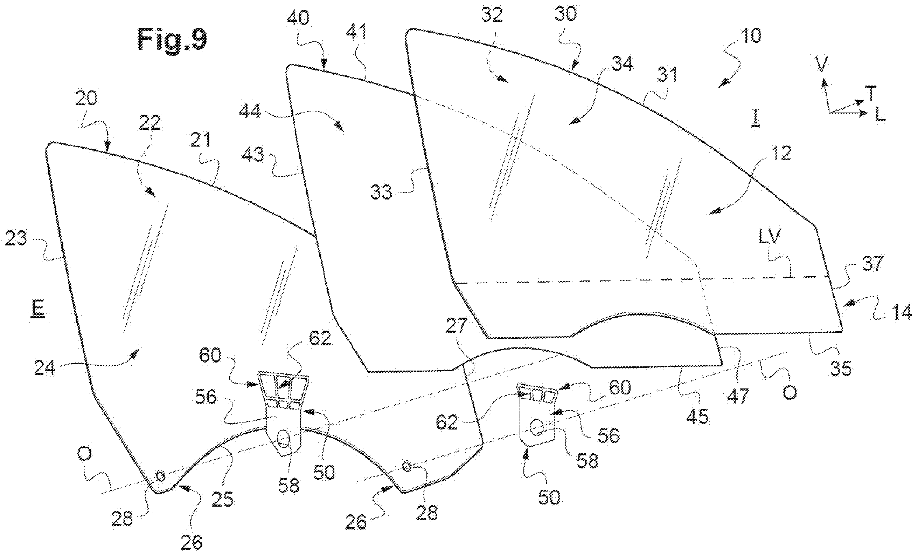

Dans l'exemple de réalisation du vitrage illustré à la figure 9A du document, la feuille en verre intérieure n'est pas liée à l'insert, un espace étant notamment présent entre eux.

Ainsi, la feuille intérieure n'est-elle pas directement retenue en cas de chocs, la feuille intérieure étant uniquement reliée au dispositif d'entraînement par la feuille intercalaire assurant son assemblage avec la feuille extérieure.

Dans l'exemple de réalisation du vitrage illustré à la figure 9B du document, l'insert est lié à la feuille en verre intérieure par collage, notamment par l'intermédiaire d'une patte de l'insert qui vient coopérer avec la face interne de la feuille en verre intérieure.

Cependant, l'amélioration résultant de la fixation par collage entre la patte de l'insert et la feuille en verre intérieure demeure limitée.

Surtout une telle patte forme localement une surépaisseur, un renflement, par rapport à la feuille intérieure de sorte que l'insert selon l'exemple de réalisation de la figure 9B présente l'inconvénient d'augmenter l'encombrement du vitrage.

Or, l'encombrement du vitrage feuilleté est pour un vitrage latéral une caractéristique importante compte tenu de son implantation dans l'espace contraint que constitue une portière d'un véhicule automobile.

Par ailleurs, l'encombrement du vitrage est également une caractéristique importante lorsqu'une interchangeabilité entre un vitrage latéral de type feuilleté et un vitrage latéral de type monolithique est souhaitée par le constructeur automobile afin de standardiser les moyens de liaison, le dispositif d'entraînement associé.

Ainsi, outre ces inconvénients, la sécurité obtenue avec un tel vitrage feuilleté demeure insuffisante pour garantir qu'en cas de casse au niveau de la partie de fixation, le vitrage feuilleté restera bien attaché au dispositif d'entraînement via les moyens de liaison reçus dans le trou de fixation et ce faisant ne sera pas susceptible de se transformer en un projectile à même de provoquer des dommages.

C'est la raison pour laquelle, un vitrage feuilleté selon ce deuxième exemple n'offre guère sur le plan de la sécurité qu'une amélioration insuffisante par rapport à un vitrage selon le premier exemple et ne constitue dès lors pas une solution satisfaisante pour une application automobile.

L'un des buts de la présente invention est notamment de remédier aux inconvénients de l'art antérieur, l'invention visant plus particulièrement et préférentiellement un vitrage feuilleté offrant une sécurité accrue en cas de chocs à même de provoquer la casse de la partie de fixation, notamment lorsque ledit vitrage est utilisé en tant que vitrage latéral dans une portière sans cadre d'un véhicule automobile.

### Résumé de l'invention

Dans ce but, l'invention propose un vitrage feuilleté du type décrit précédemment, caractérisé en ce que ledit insert comporte au moins une partie qui est interposée entre l'intercalaire et l'une extérieure ou intérieure desdites feuilles de verre.

Avantageusement, ledit au moins un insert selon l'invention est inclus dans le vitrage, l'insert s'étendant au moins partiellement à l'intérieur du vitrage, entre la feuille de verre extérieure et la feuille de verre intérieure, de manière à sécuriser l'accrochage du vitrage.

Avantageusement, l'insert selon l'invention a pour fonction de transmettre aux moyens de liaison les efforts survenant notamment en cas de choc(s) et tout particulièrement dans la partie de fixation de manière à garantir la retenue du vitrage feuilleté.

Grâce à un tel insert, le vitrage est susceptible d'être retenu par les moyens de liaison en particulier en cas de casse, suite à un ou des chocs, survenant au niveau de la partie de fixation formée par au moins la feuille de verre extérieure.

Avantageusement, l'intégration d'au moins un insert permet ainsi d'accroître la sécurité d'utilisation d'un vitrage feuilleté en tant que vitrage latéral en évitant tout particulièrement que le vitrage ne puisse se transformer en un projectile, notamment mais non exclusivement lorsque ce vitrage est monté dans une portière ne comportant pas de cadre.

Avantageusement, l'insert est agencé uniquement dans la zone non visible du vitrage de sorte que le matériau constituant l'insert peut être choisi librement, notamment en fonction de ses caractéristiques mécaniques de résistance.

Avantageusement, l'insert permet de renforcer, localement au niveau de la partie de fixation, la résistance du vitrage. Par comparaison avec le deuxième exemple de réalisation selon l'art antérieur, ladite résistance n'est en effet plus limitée à la résistance au déchirement de l'intercalaire, soit celle du PVB.

Selon d'autres caractéristiques de l'invention :
- ladite au moins une partie de l'insert s'étend dans la zone non visible recouverte par la feuille de verre intérieure ;
- ladite au moins une partie de l'insert est juxtaposée à l'intercalaire ;
- ladite au moins une partie de l'insert s'étend parallèlement à une face intérieure de l'une extérieure ou intérieure desdites feuilles de verre ;
- ladite au moins une partie de l'insert comporte au moins une ouverture de manière à obtenir, à travers ladite au moins une partie de l'insert, au moins une aire de fixation entre l'intercalaire et la feuille de verre extérieure ou la feuille de verre intérieure, directement ou indirectement adjacente à l'intercalaire ;
- ladite au moins une partie de l'insert s'étendant dans le vitrage, entre l'intercalaire et l'une extérieure ou intérieure desdites feuilles de verre, présente une surface qui est supérieure à celle de la partie opposée comportant ledit orifice ;
- ladite au moins une partie de l'insert présente une épaisseur comprise entre 0,03 mm et 0,35 mm, de préférence comprise entre 0,05 mm et 0,2 mm ;
- ledit insert est en matière plastique, par exemple en polyéthylène téréphtalate, ou métallique, par exemple en acier ;
- l'orifice dudit insert est de forme circulaire, ledit orifice circulaire présentant un diamètre qui est supérieur ou égal à celui dudit trou de fixation traversé par lesdits moyens de liaison ;
- au moins une pièce formant un patch est interposée entre l'insert et la feuille de verre extérieure ou la feuille de verre intérieure ;
- ladite pièce formant un patch est en matériau polymère, par exemple un film en polyvinylbutyral ;
- ladite pièce formant un patch comporte un orifice configuré pour être aligné avec le trou de fixation traversé par lesdits moyens de liaison ;
- ladite au moins une partie de fixation du vitrage comporte au moins la feuille de verre extérieure, non recouverte par l'intercalaire et par la feuille de verre intérieure ;
- ladite au moins une partie de fixation du vitrage comporte au moins la feuille de verre extérieure et au moins l'une des feuilles formant ledit intercalaire, respectivement non recouverte par la feuille de verre intérieure ;
- ladite au moins une partie de fixation du vitrage comporte la feuille de verre extérieure, l'intercalaire et la feuille de verre intérieure.

### Brève description des figures

D'autres caractéristiques et avantages de l'invention apparaitront au cours de la lecture de la description détaillée qui va suivre pour la compréhension de laquelle on se reportera aux dessins annexés dans lesquels :

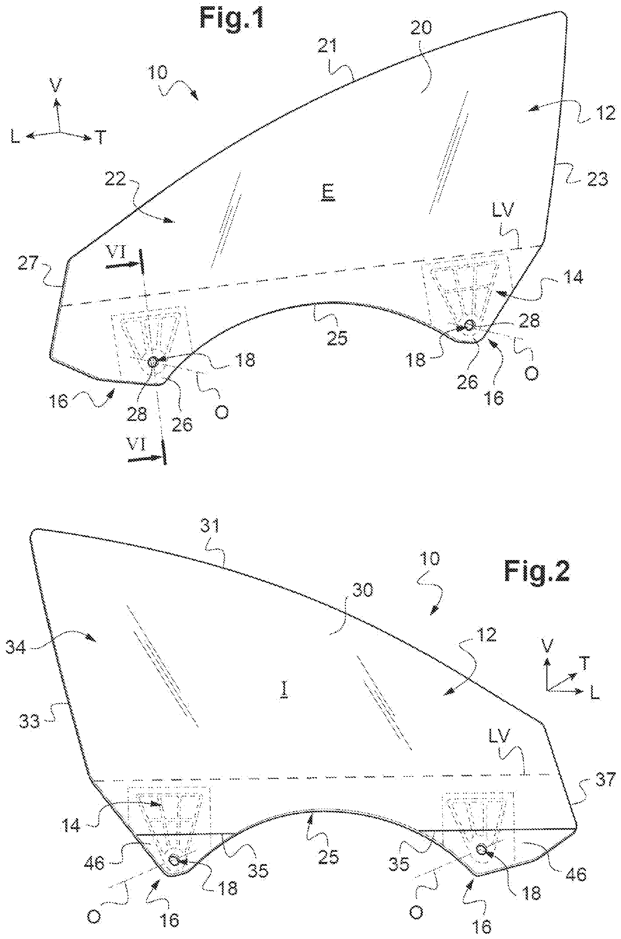

[fig.1] La figure 1 est une vue en perspective qui représente, de l'extérieur, un vitrage feuilleté pour un véhicule automobile selon un premier mode de réalisation, notamment un vitrage latéral de type asymétrique destiné à être monté coulissant dans une portière, et qui illustre la feuille de verre extérieure du vitrage feuilleté comportant dans sa zone non visible deux parties de fixation avant et arrière munies chacune d'un trou de fixation destiné à recevoir des moyens de liaison avec un dispositif d'entraînement du vitrage ;
[fig.2] La figure 2 est une vue en perspective qui représente, de l'intérieur, le vitrage feuilleté selon la figure 1 et qui illustre en outre les deux parties de fixation du vitrage feuilleté non recouverte par la feuille de verre intérieure ;

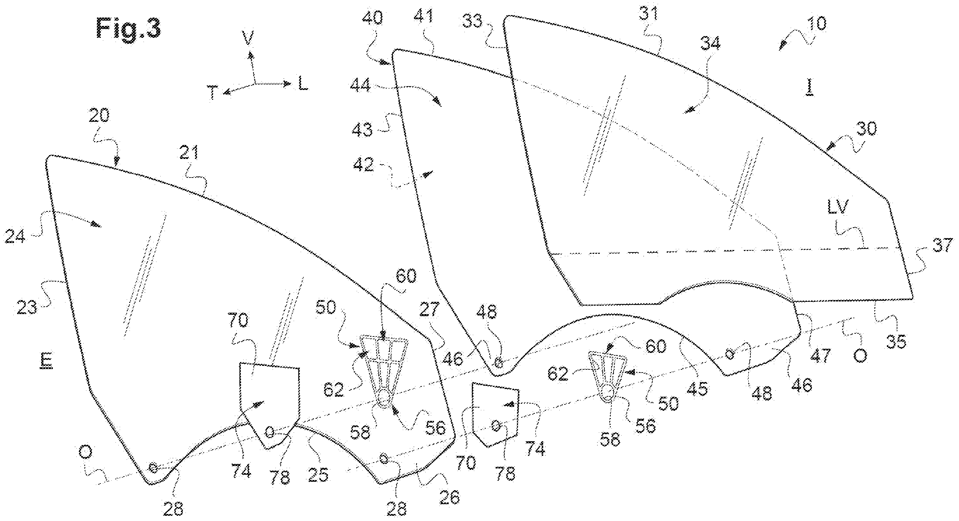

[fig.3] est une vue en perspective qui représente, en éclaté, le vitrage feuilleté selon les figures 1 et 2, et qui illustre au moins un insert et un patch qui, agencés dans chacune des parties de fixation du vitrage, sont interposés entre l'intercalaire et la feuille de verre extérieure, l'insert et le patch étant rendus visibles par transparence sur les figures 1 et 2,

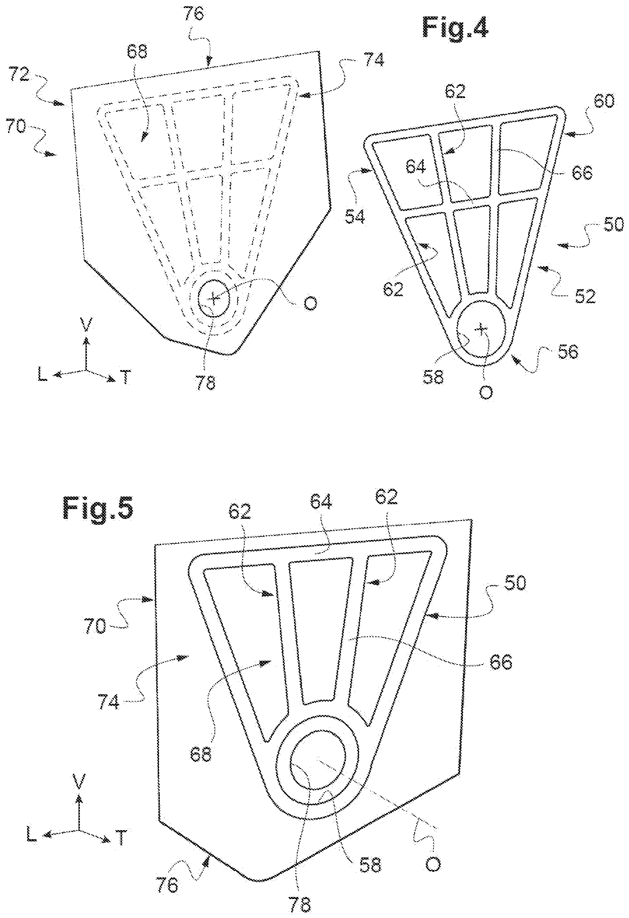

[fig.4] est une vue en perspective qui représente, en éclaté, l'insert et le patch destinés à être agencés dans celle arrière des deux parties de fixation du vitrage feuilleté selon les figures 1 à 3 et qui illustre en détail un exemple de réalisation d'un tel insert et d'un patch comportant chacun un orifice configuré pour être aligné sur le trou de fixation de la partie de fixation arrière, ledit insert comportant une partie ajourée par des ouvertures qui est destinée à s'étendre au moins en partie à l'intérieur du vitrage, au moins dans la partie de la zone non visible qui est comprise entre la limite de visibilité et le bord inférieur de la feuille de verre intérieure ;
[fig.5] est une vue en perspective qui représente l'insert et le patch destinés à être agencés dans celle avant des deux parties de fixation du vitrage feuilleté selon les figures 1 à 3 et qui illustre en détail un exemple de réalisation d'un tel insert qui est analogue à l'insert de la figure 4, l'insert comportant un orifice et une partie ajourée par des ouvertures ;

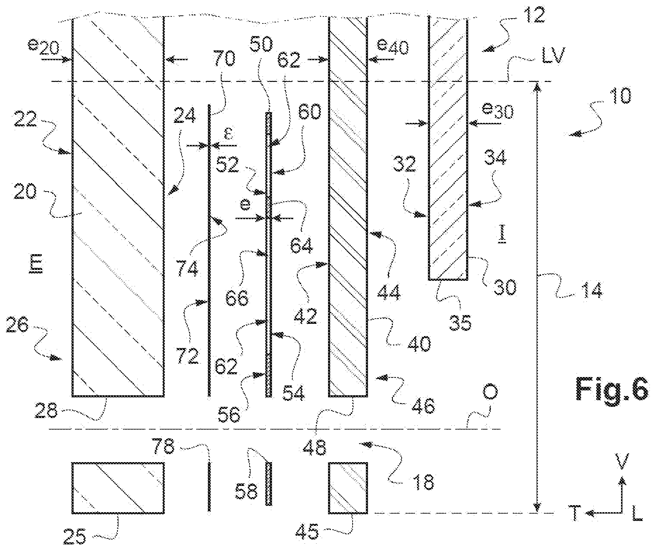

[fig.6] est une vue en coupe verticale de la partie de fixation arrière du vitrage feuilleté selon le plan VI-VI représenté à la figure 1 qui représente, en éclaté, plus particulièrement la partie non visible dudit vitrage et qui illustre en détail selon le premier mode de réalisation un insert juxtaposé à l'intercalaire du côté de la feuille de verre extérieure auquel est associé un patch qui est interposé entre l'insert et ladite feuille de verre extérieure ;

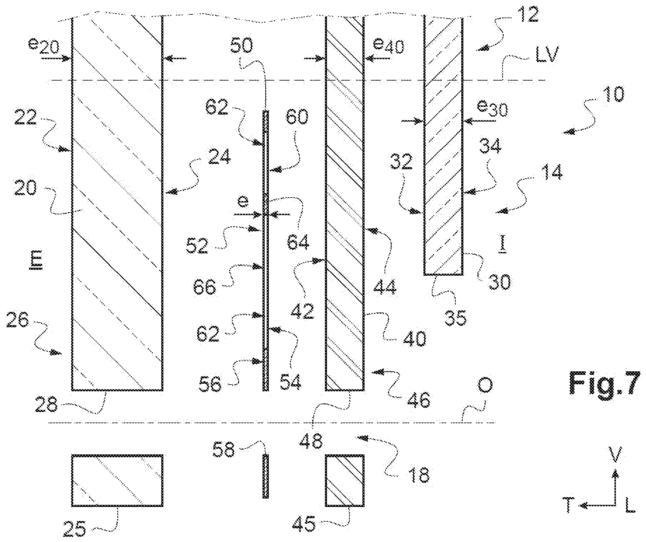

[fig.7] est une vue en coupe qui, similaire à la figure 6, représente une variante de réalisation du vitrage feuilleté selon le premier mode de réalisation et qui illustre, par comparaison, un insert sans patch, ledit insert étant respectivement juxtaposé à l'intercalaire et à la feuille de verre extérieure et comportant au moins partie interposée entre l'intercalaire et la feuille de verre extérieure ;

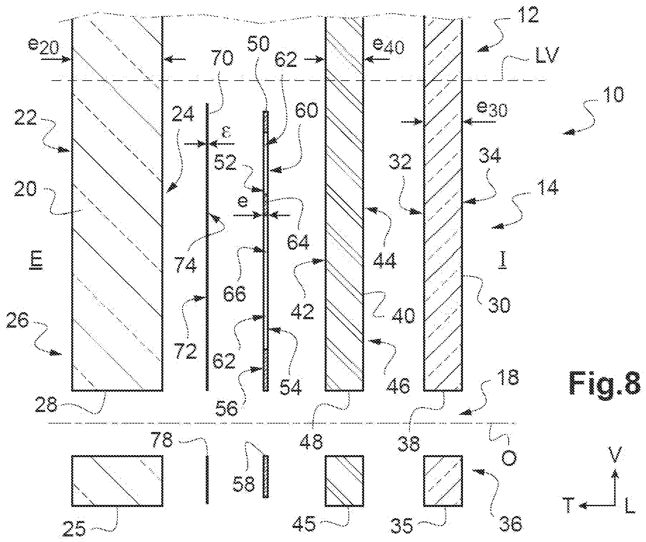

[fig.8] est une vue en coupe qui, similaire aux figures 6 et 7, représente un deuxième mode de réalisation du vitrage feuilleté et qui, par comparaison avec le premier mode, illustre la partie de fixation d'un vitrage feuilleté de type symétrique dans laquelle la feuille de verre intérieure recouvre l'intercalaire et la feuille de verre extérieure et comportant au moins un insert, associé ou non à un patch ;
[fig.9] est une vue en perspective d'un vitrage feuilleté qui représente, en éclaté, un troisième mode de réalisation du vitrage feuilleté et qui, par comparaison avec le premier mode, illustre un vitrage feuilleté de type asymétrique dans lequel la partie de fixation formée dans la feuille de verre extérieure n'est pas recouverte par l'intercalaire, ledit intercalaire présentant une hauteur identique à celle de la feuille de verre intérieure et étant également dépourvu de trou de fixation ;

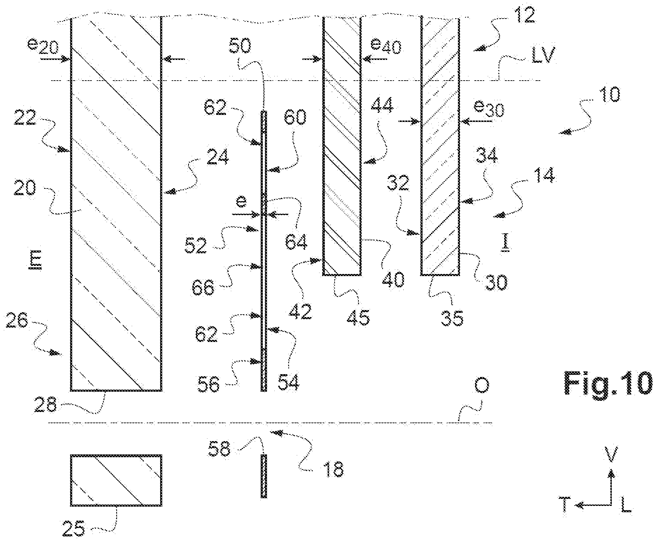

[Fig. 10] est une vue en coupe qui, similaire aux figures 6 et 7 ou la figure 8, représente en éclaté un vitrage feuilleté selon le troisième mode de réalisation de la figure 9 et qui illustre la partie de fixation comportant un insert dont au moins une partie est interposée entre l'intercalaire et la feuille de verre extérieure.

### Description détaillée de l'invention

Dans la description détaillée qui suit, on utilisera de manière non limitative en référence au trièdre (L, V, T) représenté sur les figures, les orientations longitudinale, verticale et transversale.

Par convention, on utilisera dans la description les termes « avant » et « arrière » en référence à l'orientation longitudinale, les termes « supérieur » et « inférieur », ou « haut » et « bas », en référence à l'orientation verticale et les termes « extérieur » et « intérieur » ou « externe » et « interne » en référence à l'orientation transversale dudit trièdre (L, V, T).

Dans la suite de la description, les modes de réalisation et/ou variantes de l'invention seront avantageusement décrits par comparaison et, sur les figures, des éléments présentant des fonctions analogues ou des structures identiques seront désignés par une même référence.

On a représenté sur les figures 1 à 6 un premier mode de réalisation d'un vitrage 10 feuilleté pour un véhicule automobile selon de l'invention.

Le vitrage 10 feuilleté selon l'invention sera décrit à titre d'exemple non limitatif dans le cadre d'une application comme vitrage latéral.

Un tel vitrage latéral est destiné à être monté coulissant, selon l'orientation verticale, dans une portière (non représentée) du véhicule. Le vitrage latéral est destiné à fermer une baie qui est ménagée dans la portière du véhicule.

Dans une telle application pour un véhicule automobile, le vitrage 10 réalise alors une séparation entre un espace E qui est extérieur au véhicule et un espace intérieur I qui est intérieur au véhicule. Ainsi, les termes « extérieur » et « intérieur » appliqués ci-après au vitrage 10 feuilleté le sont conformément à cette notion d'espace extérieur et intérieur.

On décrira plus particulièrement le vitrage 10 feuilleté selon le premier mode de réalisation en référence aux figures 1 à 3 qui illustrent ledit vitrage 10 feuilleté en perspective successivement vue de l'extérieur, de l'intérieur et en éclaté.

Le vitrage 10 feuilleté comporte une zone 12, dite visible, et une zone 14, dite non visible, qui s'étendent de part et d'autre d'une limite LV de visibilité du vitrage, la zone 14 non visible correspondant à une partie inférieure du vitrage dissimulée en permanence dans la portière.

On a représenté sur les figures la limite LV de visibilité en pointillés afin de la matérialiser, ladite limite LV de visibilité correspondant généralement à un joint lécheur monté solidaire de la portière.

Un tel joint lécheur est agencé de manière à coopérer avec le vitrage 10 feuilleté, en particulier lorsque ledit vitrage 10 coulisse relativement à la portière.

Le vitrage 10 feuilleté comporte, dans ladite zone 14 non visible située en dessous de la limite LV de visibilité, au moins une partie 16 de fixation qui comporte au moins un trou 18 de fixation destiné à recevoir des moyens de liaison du vitrage 10 avec un dispositif d'entraînement (non représenté) dudit vitrage 10.

Le vitrage 10 feuilleté comporte au moins un trou 18 de fixation qui présente un axe 0 d'orientation transversale.

Les moyens de liaison entre le vitrage 10 et le dispositif d'entraînement comportent par exemple au moins un axe destiné à traverser la partie 16 de fixation du vitrage 10 et cela par ledit au moins un trou 18 de fixation, lequel trou 18 de fixation présente une forme tubulaire.

De manière connue, le dispositif d'entraînement (parfois appelé « lève-vitre ») est commandé sélectivement pour déplacer, suivant un mouvement de translation, ledit vitrage 10 en hauteur entre au moins une position haute, dite de fermeture, de la baie de la portière et une position basse, dite d'ouverture de tout ou partie de ladite baie.

Selon le premier mode de réalisation, le vitrage 10 feuilleté comporte ici deux parties 16 de fixation, respectivement une première partie 16 de fixation située vers l'avant et une deuxième partie 16 de fixation située vers l'arrière.

Les première et deuxième parties 16 de fixation sont par exemple formées par des excroissances, séparées l'une de l'autre selon l'orientation longitudinale. Chacune desdites première et deuxième parties 16 de fixation comporte au moins un trou 18 de fixation.

En variante non représentée, le vitrage 10 feuilleté comporte une seule partie 16 de fixation, ladite partie 16 de fixation comportant alors par exemple deux trous 18 de fixation espacés l'un de l'autre selon la direction longitudinale.

Le nombre de partie 16 de fixation du vitrage 10 est, comme la forme de ce dernier, déterminé en fonction de l'application, c'est-à-dire du véhicule automobile, tout comme le nombre de trou 18 de fixation est déterminé en fonction du dispositif d'entraînement du vitrage.

Selon les applications et tel que rappelé en préambule, le vitrage 10 feuilleté est monté mobile dans une portière de véhicule qui comporte ou non un cadre délimitant la baie destinée à être fermée par le vitrage 10 feuilleté.

L'absence d'un tel cadre de portière ajoute aux problèmes en matière de sécurité, aucun cadre ne pouvant en particulier participer à retenir le vitrage 10 en cas de choc(s), par exemple lors d'un accident.

En effet, utilisé comme vitrage latéral monté dans une portière, un vitrage 10 feuilleté doit rester lié à la portière, notamment attaché au dispositif d'entraînement par l'intermédiaire des moyens de liaison qui sont montés dans le ou les trous 18 de fixation du vitrage 10.

Le vitrage 10 feuilleté doit donc répondre à des exigences de sécurité afin de ne pas risquer de se transformer en un projectile en cas de casse de la partie de fixation car alors un tel vitrage libre serait susceptible de provoquer des dommages, notamment mais non exclusivement aux occupants du véhicule.

C'est la raison pour laquelle, en cas de bris ou de casse du vitrage 10 feuilleté survenant au niveau de la ou les parties 16 de fixation reliées à la portière (avec ou sans cadre), il est essentiel de pouvoir garantir que le vitrage 10 ne puisse se désolidariser et reste toujours attaché au dispositif d'entraînement via les moyens de liaison.

Tel qu'illustré sur les figures 1 à 3 notamment, le vitrage 10 feuilleté comporte au moins une feuille 20 de verre extérieure et une feuille 30 de verre intérieure qui sont assemblées par l'intermédiaire d'un intercalaire 40.

Le vitrage 10 feuilleté utilisé ici comme vitrage latéral est délimité par un pourtour de forme globalement parallélépipédique.

La feuille 20 de verre extérieure comporte une face 22 extérieure et une face 24 intérieure, respectivement orientées vers l'espace E extérieur et vers l'espace I intérieur.

Tel qu'illustré sur la figure 1, la feuille 20 de verre extérieure comporte successivement un bord 21 supérieur, un bord 23 arrière, un bord 25 inférieur et un bord 27 avant, lesdits bord 21 supérieur et bord 25 inférieur opposés s'étendant globalement selon l'orientation longitudinale et lesdits bord 23 arrière et bord 27 avant opposés s'étendant globalement selon l'orientation verticale.

La feuille 20 de verre extérieure comporte au niveau du bord 25 inférieur au moins une excroissance 26 destinée à former tout ou au moins une partie de ladite au moins une partie 16 de fixation du vitrage 10 feuilleté.

De préférence et tel qu'illustré sur les figures 1 et 3, la feuille 20 de verre extérieure comporte deux excroissances 26 qui sont respectivement situées à l'avant et à l'arrière du vitrage 10.

Le bord 25 inférieur de la feuille 20 de verre extérieure présente centralement un tronçon curviligne formant un profil concave orienté vers le bas.

La feuille 20 de verre extérieure comporte, dans chacune desdites excroissances 26, un trou 28 la traversant et présentant un axe qui est coaxial à l'axe O du trou 18 de fixation du vitrage.

Selon les modes de réalisation du vitrage 10 feuilleté, le trou 28 forme tout ou une partie dudit trou 18 de fixation, après assemblage des différentes feuilles du vitrage 10.

En effet, selon le type du vitrage 10 feuilleté, symétrique ou asymétrique, ladite au moins une partie 16 de fixation est constituée par tout ou une partie seulement des feuilles constituant ledit vitrage 10.

La feuille 30 de verre intérieure comporte une face 32 extérieure et une face 34 intérieure, respectivement orientées vers l'espace E extérieur et vers l'espace I intérieur.

Tel qu'illustré sur la figure 2, la feuille 30 de verre intérieure comporte successivement un bord 31 supérieur, un bord 33 arrière, un bord 35 inférieur et un bord 37 avant, lesdits bord 31 supérieur et bord 35 inférieur opposés s'étendant globalement selon l'orientation longitudinale et lesdits bord 33 arrière et bord 37 avant opposés s'étendant globalement selon l'orientation verticale.

Le vitrage 10 feuilleté illustré aux figures 1 à 3 est un vitrage de type asymétrique, c'est-à-dire un vitrage dans lequel au moins la feuille 30 de verre intérieure est plus courte en hauteur que la feuille 20 de verre extérieure.

Dans ce premier mode de réalisation, les parties 16 de fixation du vitrage 10 sont constituées par la feuille 20 de verre extérieure et l'intercalaire 40 comme l'illustrent les figures 1 à 3.

De préférence, la feuille 30 de verre intérieure est plus mince que la feuille 20 de verre extérieure, c'est-à-dire présente selon l'orientation transversale une épaisseur « e30 » qui est inférieure à une épaisseur « e20 » de la feuille 20 de verre extérieure.

En variante non représentée, la feuille 30 de verre intérieure et la feuille 20 de verre extérieure sont de même épaisseur.

Bien que plus courte, la feuille 30 de verre intérieure s'étend dans la partie 14 non visible, soit en dessous de la limite LV de visibilité. La feuille 30 de verre intérieure présente ici sensiblement une bande dont la hauteur peut varier longitudinalement entre l'arrière et l'avant, ladite hauteur étant comprise entre la limite LV de visibilité et le bord 35 inférieur.

De préférence, le bord 35 inférieur comporte un profil en partie complémentaire de celui du bord 25 inférieur de la feuille 20 de verre extérieure. Ainsi, le bord 35 inférieur de la feuille 30 de verre intérieure présente centralement un tronçon curviligne formant un profil concave orienté vers le bas.

L'intercalaire 40 comporte au moins une feuille en matériau polymère, l'intercalaire 40 liant ensemble la feuille 20 de verre extérieure et la feuille 30 de verre intérieure du vitrage 10.

Dans ce premier mode de réalisation, l'intercalaire 40 comporte une feuille en matériau polymère. De préférence, ladite feuille en matériau polymère formant l'intercalaire 40 est une feuille en polyvinylbutyral (PVB).

En variante non représentée, l'intercalaire 40 comporte plus d'une feuille en matériau polymère, l'intercalaire 40 étant par exemple formé par une structure multicouches.

Un intercalaire 40 selon cette variante comporte par exemple au moins trois couches en matériau polymère, respectivement une feuille dite intercalaire qui est interposée entre deux autres feuilles.

Avantageusement, l'intercalaire 40 est une structure de type « trilayer » comportant au moins une feuille intercalaire en polyéthylène téréphtalate (PET), qui est interposée entre deux feuilles en polyvinylbutyral (PVB).

Tel qu'illustré sur la figure 3, l'intercalaire 40 comporte une face 42 extérieure située en vis-à-vis de la face 24 intérieure de la feuille 20 de verre extérieure et une face 44 intérieure située en vis-à-vis de la face 32 extérieure de la feuille 30 de verre intérieure.

L'intercalaire 40 comporte successivement un bord 41 supérieur, un bord 43 arrière, un bord 45 inférieur et un bord 47 avant, lesdits bord 41 supérieur et bord 45 inférieur opposés s'étendant globalement selon l'orientation longitudinale et lesdits bord 43 arrière et bord 47 avant opposés s'étendant globalement selon l'orientation verticale.

Le vitrage 10 feuilleté selon le premier mode de réalisation est un vitrage de type asymétrique dans lequel l'intercalaire 40 est identique à la feuille 20 de verre extérieure de sorte que seule la feuille 30 de verre intérieure est ici plus courte en hauteur et ne recouvre ainsi pas lesdites parties 16 de fixation du vitrage.

Comme la feuille 20 de verre extérieure, l'intercalaire 40 comporte deux excroissances 46 qui, s'étendant en saillie par rapport au bord 45 inférieur, comportent chacune un trou 48 qui est traversant et présente un axe qui est coaxial à l'axe O du trou 18 de fixation du vitrage 10.

Les parties 16 de fixation du vitrage 10 selon le premier mode comportent donc en outre les excroissances 26 de la feuille 20 de verre extérieure et les excroissances 46 de l'intercalaire 40, tandis que chacun des trous 18 de fixation d'axe O est formé au moins par le trou 28 ménagé à travers la feuille 20 de verre extérieure et le trou 48 ménagé à travers l'intercalaire 40.

De préférence, le trou 18 de fixation du vitrage 10 feuilleté reçoit intérieurement un manchon (non représenté) qui est fixé au vitrage 10, par exemple par collage, ledit manchon permettant notamment de rattraper les défauts de coaxialité entre les trous 28, 48 et de faciliter la mise en place des moyens de liaison.

Le vitrage 10 feuilleté comporte, dans ladite zone 14 non visible située en dessous de la limite LV de visibilité, au moins un insert 50 agencé dans chacune des parties 16 de fixation avant et arrière, lesdits inserts 50 agencés respectivement à l'avant et l'arrière sont plus particulièrement visibles sur les figures 4 et 5.

L'insert 50 comporte une face 52 externe et une face 54 interne. De préférence, l'insert 50 est une pièce mince telle qu'une plaque.

A l'état libre, c'est-à-dire avant son insertion dans le vitrage 10, lesdites faces 52 et 54 de l'insert 50 sont globalement planes.

Avantageusement, l'insert 50 est susceptible de se déformer pour suivre ensuite, selon son agencement, la courbure éventuelle du vitrage telle que la courbure que présente généralement un vitrage latéral et qui est par exemple déterminée par au moins un rayon primaire.

La face 52 externe et la face 54 interne de l'insert 50 s'étendent ainsi parallèlement à la face située en vis-à-vis, telles que la face 24 intérieure de la feuille 20 de verre extérieure pour la face 52 externe et la face 42 extérieure de l'intercalaire 40 pour la face 54 interne selon le premier mode de réalisation.

L'insert 50 comporte fonctionnellement une première partie 56, dite inférieure, comportant un orifice 58 qui est configuré pour être aligné avec l'axe O dudit trou 18 de fixation du vitrage 10.

De préférence, l'orifice 58 dudit insert 50 est de forme circulaire, ledit orifice 58 circulaire présentant un diamètre qui est supérieur ou égal à celui dudit trou 18 de fixation.

L'insert 50 comporte fonctionnellement au moins une deuxième partie 60, dite supérieure, qui constitue ladite au moins une partie de l'insert 50 destinée à être interposée entre l'intercalaire 40 et l'une desdites feuilles 20, 30 de verre, soit la feuille 20 de verre extérieure ou la feuille 30 de verre intérieure.

En fonction de la conception du vitrage 10 feuilleté, au moins la partie 60 supérieure voire la totalité de l'insert 50 est interposée entre l'intercalaire 40 et l'une extérieure ou intérieure desdites feuilles 20, 30 de verre.

Ainsi qu'on l'aura compris, la caractéristique selon laquelle la totalité de l'insert 50 ou seulement la partie 60 supérieure de l'insert 50 se trouve interposée entre l'intercalaire 40 et l'une extérieure ou intérieure desdites feuilles 20, 30 de verre, est notamment fonction du fait que l'insert 50 est incorporé à un vitrage 10 de type asymétrique ou symétrique et en particulier selon la hauteur de tout ou une partie de l'intercalaire 40 venant recouvrir la partie 16 de fixation.

Avantageusement, au moins une partie de l'insert 50 est donc incluse dans le vitrage 10. L'insert 50 s'étend par conséquent au moins partiellement à l'intérieur du vitrage 10, c'est-à-dire entre la feuille 20 de verre extérieure et la feuille 30 de verre intérieure, pour renforcer l'accrochage aux moyens de liaison grâce à quoi les inconvénients de l'art antérieur sont résolus et il est satisfait les exigences de sécurité, notamment en cas de chocs.

Grâce à un tel insert 50, la résistance du vitrage 10 est renforcée au niveau de la partie 16 de fixation en cas de casse ou de bris d'au moins la feuille 20 de verre extérieure formant la partie 16 de fixation, de sorte que le vitrage 10 feuilleté soit retenu par l'insert 50 au niveau des moyens de liaison.

Avantageusement, un insert 50 selon l'invention permet d'accroître la sécurité d'utilisation d'un vitrage 10 feuilleté en tant que vitrage latéral en évitant notamment que le vitrage 10 ne puisse se transformer en un projectile, tout particulièrement lorsque ledit vitrage 10 est monté dans une portière ne comportant pas de cadre.

Dans le premier mode de réalisation, le vitrage 10 feuilleté de type asymétrique comporte au moins un insert 50 qui est préférentiellement interposé entre l'intercalaire 40 et la feuille de verre 20 extérieure.

En variante non représentée, le vitrage 10 feuilleté comporte au moins un insert 50 qui est interposé entre l'intercalaire 40 et la feuille de verre 30 intérieure, c'est-à-dire du côté opposé de l'intercalaire 40 par comparaison au premier mode de réalisation.

Dans le premier mode de réalisation, le vitrage 10 feuilleté comporte deux parties 16 de fixation. De préférence, le vitrage 10 feuilleté comporte au moins un insert 50 dans chacune des parties 16 de fixation, respectivement situées à l'avant et à l'arrière dans la partie 14 non visible du vitrage 10.

En variante non représentée, le vitrage 10 feuilleté comporte deux inserts associés à l'une au moins ou à chacune des parties 16 de fixation, par exemple un premier insert interposé entre l'intercalaire 40 et la feuille de verre 20 extérieure et un deuxième insert interposé entre l'intercalaire 40 et la feuille de verre 30 intérieure.

Avantageusement, le vitrage 10 comporte un premier insert 50 qui est associé à la partie 16 de fixation située à l'arrière et un deuxième insert 50 qui est associé à la partie 16 de fixation située à l'avant.

Comme on peut le constater en les comparant sur la figure 3, le premier insert 50 illustré en détail sur la figure 4 et le deuxième insert 50 illustré sur la figure 5 ne sont ici pas totalement identique l'un à l'autre. Toutefois, le deuxième insert 50 présente fonctionnellement les mêmes caractéristiques que le premier insert 50 et s'en distingue par une partie 60 supérieure de dimensions plus réduites.

C'est la raison pour laquelle, la description de l'insert 50 qui vient d'être faite vaut à l'identique pour premier insert situé à l'arrière comme pour le deuxième insert situé à l'avant.

De préférence, le premier insert 50 et le deuxième insert 50 sont ici des pièces qui sont totalement indépendantes l'une de l'autre. En variante non représentée, le premier insert 50 et le deuxième insert 50 sont reliés entre eux.

On décrira plus particulièrement ci-après les caractéristiques de l'insert 50 selon l'exemple de réalisation illustré aux figures 4 et 5.

Avantageusement, la partie 60 supérieure de l'insert 50 comporte au moins une ouverture 62. De préférence, la partie 60 supérieure de l'insert 50 comporte une pluralité d'ouvertures 62 de manière à former une partie ajourée.

Dans l'exemple de réalisation, la partie 60 supérieure de l'insert 50 comporte des ouvertures 62 respectivement délimitées chacune par une ou des barres 64 d'orientation longitudinale et une ou des barres 66 d'orientation verticale.

Avantageusement, les ouvertures 62 réalisées dans la partie 60 supérieure de l'insert 50 sont configurées pour former une grille.

Chacune des ouvertures 62 ménagées dans la partie 60 supérieure de l'insert 50 permet d'obtenir, à travers ladite au moins une partie 60 de l'insert, une aire 68 de fixation entre l'intercalaire 40 et, directement ou indirectement, la feuille de verre adjacente, soit ici la feuille de verre 20 extérieure dans le premier mode de réalisation.

En variante non représentée, l'insert 50 ne comporte pas d'ouverture 62 de sorte que la partie 60 supérieure est pleine et non pas ajourée.

De préférence, la partie 60 supérieure de l'insert 50 s'étendant dans le vitrage, entre l'intercalaire 40 et l'une extérieure ou intérieure desdites feuilles 20, 30 de verre, présente une surface qui est supérieure à celle de la partie 56 inférieure opposée comportant ledit orifice 58.

Une telle caractéristique de surface pour l'insert 50 présente tout particulièrement un intérêt lorsque la zone 14 non visible est de dimension réduite, et cela afin d'accroître la partie de l'insert 50 qui est intégrée à l'intérieur du vitrage 10.

Tel qu'illustré sur les figures 4 et 5, ledit insert 50 présente une forme, par exemple triangulaire, qui s'élargit entre l'extrémité inférieure comportant ledit orifice 58 et l'extrémité supérieure de ladite au moins partie 60 supérieure de l'insert 50.

Avantageusement, l'insert 50 est une pièce mince, telle qu'une plaque.

De préférence, l'insert 50 présente une épaisseur sensiblement constante, depuis sa partie 56 inférieure percée jusqu'à sa partie 60 supérieure ajourée.

En variante non représentée, l'épaisseur de l'insert 50, n'est pas constante, la partie 56 inférieure présentant une épaisseur supérieure à celle de la partie 60 supérieure, notamment lorsque l'insert 50 n'est pas entièrement recouvert par exemple par l'intercalaire 40.

Avantageusement, l'insert 50 présente une épaisseur « e » comprise entre 0,03 et 0,35 mm, de préférence une épaisseur « e » comprise entre 0,05 mm et 0,2 mm.

Pour un vitrage 10 feuilleté utilisé en tant que vitrage latéral, l'épaisseur « e20 » de la feuille de verre 20 extérieure est par exemple comprise entre 1,5 mm et 5 mm, préférentiellement entre 2,85 mm et 4,85 mm.

Lorsque la feuille de verre 30 intérieure est d'une épaisseur plus réduite que la feuille de verre 20 extérieure, l'épaisseur « e30 » de la feuille de verre 30 intérieure est par exemple comprise entre 1,0 mm et 3 mm, préférentiellement entre 1,1 mm et 2.6 mm.

La feuille en matériau polymère formant l'intercalaire 40 présente une épaisseur « e40 », par exemple comprise entre 0,3 mm et 1,2 mm, préférentiellement entre 0,5 mm et 0,9 mm.

En comparant les différentes épaisseurs qui viennent d'être données à titre d'exemples non limitatifs, on notera que l'insert 50 présente une épaisseur « e » très réduite laquelle est à même de lui permettre d'être parfaitement intégré dans l'empilement des différentes feuilles formant le vitrage 10 feuilleté.

Tel qu'illustré sur les figures 3 à 6 notamment, l'insert 50 est formé par une plaque mince présentant selon l'orientation transversale ladite épaisseur « e », de préférence sensiblement constante.

Sur la figure 6 notamment et afin d'en permettre la représentation, l'insert 50 n'est pas représenté à l'échelle, c'est-à-dire représenté avec une épaisseur « e » qui est proportionnelle par rapport à celles des feuilles formant le vitrage 10 feuilleté.

De préférence, l'insert 50 est une pièce réalisée en matière plastique, par exemple en polyéthylène téréphtalate (PET), ou encore en métal, par exemple en acier.

Le matériau de l'insert 50 est déterminé en fonction des applications de manière à permettre d'accroître localement la résistance, laquelle résistance au déchirement est dès lors avantageusement supérieure à celle de l'intercalaire 40 formé par exemple par une feuille en polyvinylbutyral (PVB).

Selon l'invention, l'insert 50 a pour fonction de transmettre aux moyens de liaison (non représentés) les efforts de manière à garantir la retenue du vitrage 10 feuilleté, lesdits efforts étant orientés orthogonalement à l'axe O du trou de fixation.

Grâce à un tel insert 50, le vitrage 10 est susceptible d'être retenu par les moyens de liaison en particulier en cas de casse, suite à un ou des chocs, survenant au niveau de la partie 16 de fixation formée par au moins la feuille 20 de verre extérieure.

Avantageusement, l'intégration d'au moins un insert 50 dans le vitrage 10 permet d'en accroître la sécurité d'utilisation tout particulièrement en tant que vitrage latéral pour une portière.

L'insert 50 permet d'éviter que le vitrage 10 ne puisse se transformer en un projectile, notamment mais non exclusivement lorsque le vitrage 10 est monté dans une portière ne comportant pas de cadre.

Selon une caractéristique du premier mode de réalisation, le vitrage 10 comporte au moins une pièce 70 qui est associée à l'insert 50 en vue de parfaire la cohésion au sein du vitrage 10.

Avantageusement, ladite pièce 70 forme un patch et sera désignée de manière non limitative par ce terme dans la suite de la description.

Le patch 70 est interposé entre ledit insert 50 et la feuille de verre 30 extérieure, un patch 70 étant disposé au niveau de chaque partie 16 de fixation du vitrage 10.

Plus particulièrement illustrée sur les figures 4 et 5, le patch 70 comporte une face 72 externe et une face 74 interne.

Comme illustré notamment par la figure 6, la face 72 externe du patch 70 est destinée à être en contact avec la face 24 interne de la feuille 20 de verre extérieure et sa face 74 interne est destinée à être en contact avec la face 52 externe de l'insert 50.

De préférence, le patch 70 est en matériau polymère, par exemple formé d'un film en polyvinylbutyral (PVB).

Avantageusement, le patch 70 présente une épaisseur « ε » qui est comprise entre 0,03 mm et 0,15 mm, préférentiellement entre 0,05mm et 0,1 mm.

Le patch 70 est délimité par un pourtour 76 dont la forme est notamment déterminée en fonction de celle de la partie 16 de fixation et de l'insert 50.

De préférence et tel qu'illustré sur les figures 4 et 5, la superficie du patch 70 est supérieure à celle de l'insert 50 de manière à couvrir l'ensemble dudit insert 50, la partie 56 inférieure comme la partie 60 supérieure.

Avantageusement, le patch 70 permet d'améliorer la cohésion de l'assemblage, entre la face 24 interne de la feuille 20 de verre extérieure et la face 52 externe de l'insert 50, tant au niveau de la partie 56 inférieure que de la partie 60 supérieure de l'insert 50.

Le patch 70 permet notamment de parfaire la cohésion au niveau des aires 68 de fixation lorsque l'insert 50 comporte des ouvertures 62 ménagées dans la partie 60 supérieure, le patch 70 étant préférentiellement réalisé en polyvinylbutyral (PVB) comme l'intercalaire 40 situé en vis-à-vis.

On a représenté sur la figure 4 en pointillés la silhouette de l'insert 50 sur le patch 70 afin de matérialiser lesdites aires 68 de fixation obtenues à la faveur des ouvertures 62.

Avantageusement, le patch 70 comporte un orifice 78 qui est configuré pour être aligné avec le trou 18 de fixation traversé par lesdits moyens de liaison. Comme pour l'insert 50, l'orifice 78 est avantageusement un orifice circulaire présentant un diamètre supérieur ou égal à celui du trou 18 de fixation.

Dans ce premier mode de réalisation, l'insert 50 est interposé entre l'intercalaire 40 et la feuille 20 de verre extérieure et se trouve intégralement recouvert de part et d'autre, du côté extérieur comme du côté intérieur.

En effet, l'intercalaire 40 recouvre dans ce premier mode entièrement l'extension 26 pour former ensemble chaque partie 16 de fixation du vitrage 10.

Tel qu'illustré sur la figure 6 ou également par transparence sur les figures 1 et 2, l'insert 50 comporte au moins une partie 60 supérieure qui s'étend dans la zone 14 non visible recouverte par la feuille de verre 30 intérieure.

Ainsi, ladite partie 60 supérieure de l'insert 50 est selon l'orientation verticale comprise entre le bord 35 inférieur de la feuille de verre 30 intérieure et la limite LV de visibilité.

L'insert 50 est juxtaposé à l'intercalaire 40. La face 54 interne de l'insert 50 coopère avec la face 42 externe de l'intercalaire 40 tandis que la face 52 externe de l'insert 50 coopère, ici indirectement à travers le patch 70, avec la face 24 interne de la feuille de verre 20 extérieure.

Dans ce premier mode de réalisation, les aires 68 de fixation sont formées à travers les ouvertures 62 de l'insert 50, entre la face 42 externe de l'intercalaire 40 et la face 74 interne du patch 70.

Dans ce premier mode de réalisation, ladite au moins une partie 16 de fixation du vitrage 10 feuilleté de type asymétrique n'est pas recouverte par la feuille 30 de verre intérieure.

Avantageusement, la partie 16 de fixation du vitrage 10 feuilleté comporte la feuille 20 de verre extérieure, le patch 70, l'insert 50 et l'intercalaire 40, ici au moins ladite feuille en matériau polymère ou en variante au moins l'une des feuilles formant un intercalaire de type multicouches.

On décrira ci-après par comparaison avec le premier mode de réalisation illustré aux figures 1 à 6, une variante qui est illustrée par la figure 7.

Dans cette variante de réalisation, le patch 70 est supprimé.

Par conséquent, la face 52 externe de l'insert 50 est ici directement en contact avec la face 24 interne de la feuille de verre 20 extérieure.

Dans la partie 14 non visible du vitrage 10 recevant l'insert 50, la face 42 externe de l'intercalaire 40 est également en contact direct (et non plus via le patch 70) avec la face 24 interne de la feuille 20 de verre extérieure et cela à travers les ouvertures 62 que comporte avantageusement la partie 60 supérieure de l'insert 50.

Dans la partie 16 de fixation du vitrage 10, l'intercalaire 40 est lié directement à la feuille 20 de verre extérieure au travers lesdites ouvertures 62 de l'insert 50 déterminant les aires 68 de fixation.

Dans cette variante, le vitrage 10 feuilleté asymétrique comporte une ou des parties 16 de fixation identiques à celles du premier mode de réalisation, c'est à dire des parties 16 de fixation constituées par la feuille 20 de verre extérieure, l'insert 50 et l'intercalaire 40.

On décrira ci-après par comparaison avec le premier mode de réalisation illustré aux figures 1 à 6, un deuxième mode de réalisation qui est illustré par la figure 8.

Dans ce deuxième mode de réalisation, le vitrage 10 feuilleté est un vitrage de type symétrique (et non pas asymétrique).

En effet, si la présente invention trouve avantageusement à s'appliquer à un vitrage 10 feuilleté de type asymétrique, l'invention n'y est nullement limitée et pourrait également trouver application dans un vitrage 10 feuilleté de type symétrique.

L'invention pourrait en particulier être appliquée pour sécuriser l'attachement d'un vitrage feuilleté symétrique présentant en outre des feuilles de verre extérieure et/ou intérieure d'épaisseur réduite.

La feuille 30 de verre intérieure présente la même hauteur que l'intercalaire 40 et la feuille 20 de verre extérieure.

Comme illustré sur la coupe de la figure 8, le bord 35 inférieur de la feuille 30 de verre intérieure est au même niveau que le bord 45 inférieur de l'intercalaire 40 ou encore que le bord 25 inférieur de la feuille 20 de verre extérieure, l'ensemble desdits bords présentant avantageusement un profil identique.

Dans ce deuxième mode de réalisation et contrairement au premier mode de réalisation, la partie 16 de fixation est recouverte par la feuille 20 de verre intérieure.

Avantageusement, la feuille 20 de verre intérieure s'ajoute donc à l'empilement qui, formant ladite partie 16 de fixation, comporte dès lors la feuille 20 de verre extérieure, l'insert 50 et l'intercalaire 40 et préférentiellement un patch 70.

Comme la feuille 20 de verre extérieure, la feuille 30 de verre intérieure comporte ici deux excroissances 36 qui sont respectivement situées à l'avant et à l'arrière du vitrage 10 pour venir former chacune desdites parties 16 de fixation du vitrage 10.

De plus, la feuille 30 de verre intérieure comporte, dans chacune desdites excroissances 36, un trou 38 la traversant et présentant un axe qui est coaxial à l'axe O du trou 18 de fixation du vitrage.

On décrira ci-après par comparaison avec le premier mode de réalisation illustré aux figures 1 à 6, un troisième mode de réalisation qui est illustré par les figures 9 et 10.

Selon ce troisième mode de réalisation, le vitrage 10 feuilleté est un vitrage de type asymétrique dans lequel l'intercalaire 40 présente la même hauteur que celle de la feuille 30 de verre intérieure.

Dans ce troisième mode de réalisation, ladite au moins une partie 16 de fixation du vitrage 10 comporte essentiellement les excroissances 26 de la feuille 20 de verre extérieure qui ne sont recouvertes ni par l'intercalaire 40, ni par la feuille 30 de verre intérieure.

Ainsi, ladite au moins une partie 16 de fixation du vitrage 10 est constituée par la feuille 20 de verre extérieure et l'insert 50, ici sans patch 70.

En variante non représentée, un patch 70 est interposé entre l'insert 50 et l'excroissance 26 de la feuille 20 de verre extérieure.

Selon cette variante, le patch 70 permet de lier la partie 56 inférieure de l'insert 50 à la face 24 interne de la feuille 20 de verre extérieure, c'est-à-dire la partie complémentaire de l'insert 50 qui n'est pas interposée entre l'intercalaire 40 et la feuille 20 de verre extérieure.

De préférence, l'insert 50 est modifié par rapport à celui illustré notamment aux figures 4 et 5. Avantageusement, la partie 60 supérieure destinée à être juxtaposée à l'intercalaire 40 et qui est munie d'ouvertures 62 est en effet plus réduite en hauteur.

Tel qu'illustré sur la figure 9 en éclaté, l'insert 50 comporte au-dessus de l'orifice 58 une partie 56 inférieure qui est pleine et n'est pas recouverte par l'intercalaire 40.

Avantageusement, un collage peut être réalisé entre au moins ladite partie 56 inférieure pleine de l'insert 50 et la feuille 20 de verre extérieure. L'utilisation d'un adhésif pour réaliser un tel collage constitue plus généralement une alternative à celle d'un patch 70.

Bien que la partie 16 de fixation ne soit pas recouverte par l'intercalaire 40, l'insert 50 comporte conformément aux enseignements de l'invention au moins une partie 60 supérieure qui est interposée entre l'intercalaire 40 et ici la feuille 20 de verre extérieure.

Par comparaison au premier mode, l'insert 50 n'est donc ici pas intégralement compris à l'intérieur de l'empilement du vitrage 10 feuilleté, seule ladite partie 60 supérieure ajourée l'étant.

Tel qu'illustré sur la figure 10, ladite partie 60 supérieure de l'insert 50 s'étend selon l'orientation verticale entre le bord 45 inférieur de l'intercalaire (ou le bord 35 inférieur de la feuille 30 de verre intérieure) et la limite LV de visibilité.

On décrira ci-après d'une manière générale les avantages obtenus avec l'inclusion d'au moins un insert 50 selon l'invention dans un vitrage 10 feuilleté, tout particulièrement un vitrage 10 feuilleté destiné à être utilisé en tant que vitrage latéral dans une portière de véhicule automobile.

En cas de chocs importants, par exemple lors d'un accident, les efforts appliqués notamment au niveau de la partie 16 de fixation du vitrage 10 et tout particulièrement autour du trou 18 de fixation recevant les moyens de liaison avec le dispositif d'entraînement peuvent provoquer la casse d'au moins la feuille 20 de verre extérieure constituant, selon les modes de réalisation, ladite partie 16 de fixation.

Grâce à l'insert 50, préférentiellement associé à un patch 70, on sécurise alors le vitrage 10 feuilleté de manière à garantir que le vitrage 10 reste accroché aux moyens de liaison et ne puisse s'en détacher au risque de se transformer en un projectile.

La sécurisation du vitrage 10 feuilleté obtenue résulte de l'intervention de l'insert 10 dans son ensemble en cas de chocs, l'insert 50 permettant de transférer les efforts s'appliquant alors auxdits moyens de liaison.

D'une part, il importe que la partie 56 inférieure de l'insert 50 reste attachée auxdits moyens de liaison le traversant par l'orifice 58 lorsque la feuille 20 de verre extérieure vient à se casser au niveau de son excroissance 26 formant ladite partie 16 de fixation.

Avantageusement, le matériau employé pour l'insert 50 est donc choisi pour obtenir une résistance mécanique, en particulier aux efforts de traction, et cela malgré une faible épaisseur « e » propre à permettre l'intégration de l'insert 50 dans l'empilement lors de la fabrication du vitrage 10 feuilleté.

D'autre part, ladite au moins une partie 60 supérieure de l'insert 50 qui est interposée entre l'intercalaire 40 et la feuille 20 de verre extérieure (et/ou en variante la feuille 30 de verre intérieure) participe à retenir l'ensemble du vitrage 10 du fait de son inclusion à l'intérieur.

Avantageusement, ladite au moins une partie 60 supérieure de l'insert 50 s'étend uniquement dans la partie 14 non visible du vitrage 10 située sous la limite LV de visibilité de sorte que cela n'affecte nullement l'esthétique générale du vitrage 10.

## Revendications

1. Vitrage (10) feuilleté pour un véhicule automobile, notamment un vitrage latéral destiné à être monté coulissant dans une portière du véhicule, ledit vitrage (10) comportant au moins une feuille (20) de verre extérieure et une feuille (30) de verre intérieure assemblées par un intercalaire (40) qui comporte au moins une feuille en matériau polymère, dans lequel une zone (12) visible et une zone (14) non visible du vitrage qui s'étendent de part et d'autre d'une limite (LV) de visibilité et comportant, dans ladite zone (14) non visible située en dessous de la limite (LV) de visibilité, d'une part au moins une partie (16) de fixation qui comporte au moins un trou (18) de fixation destiné à recevoir des moyens de liaison avec un dispositif d'entraînement dudit vitrage (10) et, d'autre part, au moins un insert (50) qui comporte un orifice (58) configuré pour être aligné avec ledit trou (18) de fixation, **caractérisé en ce que** ledit insert (50) comporte au moins une partie (60) qui est interposée entre l'intercalaire (40) et l'une extérieure ou intérieure desdites feuilles (20, 30) de verre.

2. Vitrage feuilleté selon la revendication 1, **caractérisé en ce que** ladite au moins une partie (60) de l'insert (50) s'étend dans la zone (14) non visible recouverte par la feuille (30) de verre intérieure.

3. Vitrage feuilleté selon la revendication 1 ou 2, **caractérisé en ce que** ladite au moins une partie (60) de l'insert (50) est juxtaposée à l'intercalaire (40).

4. Vitrage feuilleté selon l'une quelconque des revendications 1 à 3, **caractérisé en ce que** ladite au moins une partie (60) de l'insert (50) s'étend parallèlement à une face (24, 34) intérieure de l'une extérieure ou intérieure desdites feuilles (20, 30) de verre.

5. Vitrage feuilleté selon l'une quelconque des revendications précédentes, **caractérisé en ce que** ladite au moins une partie (60) de l'insert (50) comporte au moins une ouverture (62) de manière à obtenir, à travers ladite au moins une partie (60) de l'insert (50), au moins une aire (68) de fixation entre l'intercalaire (40) et la feuille (20) de verre extérieure ou la feuille (30) de verre intérieure, directement ou indirectement adjacente à l'intercalaire (40).

6. Vitrage feuilleté selon l'une quelconque des revendications précédentes, **caractérisé en ce que** ladite au moins une partie (60) de l'insert (50) s'étendant dans le vitrage, entre l'intercalaire (40) et l'une extérieure ou intérieure desdites feuilles (20, 30) de verre, présente une surface qui est supérieure à celle de la partie (56) opposée comportant ledit orifice (58).

7. Vitrage feuilleté selon l'une quelconque des revendications précédentes, **caractérisé en ce que** ladite au moins une partie (60) de l'insert (50) présente une épaisseur (e) comprise entre 0,03 mm et 0,35 mm, de préférence comprise entre 0,05 mm et 0,2 mm.

8. Vitrage feuilleté selon l'une quelconque des revendications précédentes, **caractérisé en ce que** ledit insert (50) est en matière plastique, par exemple en polyéthylène téréphtalate (PET), ou métallique, par exemple en acier.

9. Vitrage feuilleté selon l'une quelconque des revendications précédentes, **caractérisé en ce que** l'orifice (58) dudit insert (50) est de forme circulaire, ledit orifice (58) circulaire présentant un diamètre qui est supérieur ou égal à celui dudit trou (18) de fixation traversé par lesdits moyens de liaison.

10. Vitrage feuilleté selon l'une quelconque des revendications précédentes, **caractérisé en ce que** au moins une pièce (70) formant un patch est interposée entre l'insert (50) et la feuille (20) de verre extérieure ou la feuille (30) de verre intérieure.

11. Vitrage feuilleté selon la revendication 10, **caractérisé en ce que** ladite pièce (70) formant un patch est en matériau polymère, par exemple un film en polyvinylbutyral (PVB).

12. Vitrage feuilleté selon la revendication 10 ou 11, **caractérisé en ce que** ladite pièce (70) formant un patch comporte un orifice (78) configuré pour être aligné avec le trou (18) de fixation traversé par lesdits moyens de liaison.

13. Vitrage feuilleté selon l'une quelconque des revendications 1 à 12, **caractérisé en ce que** ladite au moins une partie (16) de fixation du vitrage (10) comporte au moins la feuille (20) de verre extérieure, non recouverte par l'intercalaire (40) et par la feuille (30) de verre intérieure.

14. Vitrage feuilleté selon l'une quelconque des revendications 1 à 12, **caractérisé en ce que** ladite au moins une partie (16) de fixation du vitrage (10) comporte au moins la feuille (20) de verre extérieure et au moins l'une des feuilles formant ledit intercalaire (40), respectivement non recouverte par la feuille (30) de verre intérieure.

15. Vitrage feuilleté selon l'une quelconque des revendications 1 à 12, **caractérisé en ce que** ladite au moins une partie (16) de fixation du vitrage comporte la feuille (20) de verre extérieure, l'intercalaire (40) et la feuille (30) de verre intérieure.

## Patentansprüche

1. Verbundverglasung (10) für ein Kraftfahrzeug, insbesondere eine Seitenverglasung, die dazu bestimmt ist, in einer Wagentür des Fahrzeugs verschiebbar montiert zu werden, wobei die Verglasung (10) mindestens eine äußere Glasscheibe (20) und eine innere Glasscheibe (30) aufweist, die durch eine Zwischenlage (40) zusammengefügt sind, die mindestens eine Folie aus Polymermaterial aufweist, wobei sich ein sichtbarer Bereich (12) und ein nicht sichtbarer Bereich (14) der Verglasung auf beiden Seiten einer Sichtbarkeitsgrenze (LV) erstrecken und in dem nicht sichtbaren Bereich (14), der sich unterhalb der Sichtbarkeitsgrenze (LV) befindet, einerseits mindestens einen Befestigungsteil (16), der mindestens ein Befestigungsloch (18) aufweist, das dazu bestimmt ist, Verbindungsmittel mit einer Antriebsvorrichtung der Verglasung (10) aufzunehmen, und andererseits mindestens einen Einsatz (50) aufweist, der eine Öffnung (58) aufweist, die konfiguriert ist, um an dem Befestigungsloch (18) ausgerichtet zu werden, **dadurch gekennzeichnet, dass** der Einsatz (50) mindestens einen Teil (60) aufweist, der zwischen der Zwischenlage (40) und der einen äußeren oder inneren der Glasscheiben (20, 30) angeordnet ist.

2. Verbundverglasung nach Anspruch 1, **dadurch gekennzeichnet, dass** sich der mindestens eine Teil (60) des Einsatzes (50) in den nicht sichtbaren Bereich (14) erstreckt, der durch die innere Glasscheibe (30) bedeckt ist.

3. Verbundverglasung nach Anspruch 1 oder 2, **dadurch gekennzeichnet, dass** der mindestens eine Teil (60) des Einsatzes (50) neben der Zwischenlage (40) liegt.

4. Verbundverglasung nach einem der Ansprüche 1 bis 3, **dadurch gekennzeichnet, dass** sich der mindestens eine Teil (60) des Einsatzes (50) parallel zu einer inneren Fläche (24, 34) der einen äußeren oder inneren der Glasscheiben (20, 30) erstreckt.

5. Verbundverglasung nach einem der vorstehenden Ansprüche, **dadurch gekennzeichnet, dass** der mindestens eine Teil (60) des Einsatzes (50) mindestens eine Mündung (62) aufweist, um durch den mindestens einen Teil (60) des Einsatzes (50) hindurch mindestens einen Befestigungsplatz (68) zwischen der Zwischenlage (40) und der äußeren Glasscheibe (20) oder der inneren Glasscheibe (30) zu erhalten, der direkt oder indirekt an die Zwischenlage (40) angrenzt.

6. Verbundverglasung nach einem der vorstehenden Ansprüche, **dadurch gekennzeichnet, dass** der mindestens eine Teil (60) des Einsatzes (50), der sich in der Verglasung zwischen der Zwischenlage (40) und der einen äußeren oder inneren der Glasscheiben (20, 30) erstreckt, eine Oberfläche vorweist, die größer als diejenige des gegenüberliegenden Teils (56) ist, der die Öffnung (58) aufweist.

7. Verbundverglasung nach einem der vorstehenden Ansprüche, **dadurch gekennzeichnet, dass** das mindestens ein Teil (60) des Einsatzes (50) eine Dicke (e) zwischen 0,03 mm und 0,35 mm, vorzugsweise zwischen 0,05 mm und 0,2 mm, vorweist.

8. Verbundverglasung nach einem der vorstehenden Ansprüche, **dadurch gekennzeichnet, dass** der Einsatz (50) aus Kunststoff, beispielsweise aus Polyethylenterephthalat (PET), oder aus Metall, beispielsweise aus Stahl, besteht.

9. Verbundverglasung nach einem der vorstehenden Ansprüche, **dadurch gekennzeichnet, dass** die Öffnung (58) des Einsatzes (50) kreisförmig ist, wobei die kreisförmige Öffnung (58) einen Durchmesser vorweist, der größer als oder gleich dem des Befestigungslochs (18) ist, das durch die Verbindungsmittel durchquert wird.

10. Verbundverglasung nach einem der vorstehenden Ansprüche, **dadurch gekennzeichnet, dass** mindestens ein Stück (70), das ein Patch ausbildet, zwischen dem Einsatz (50) und der äußeren Glasscheibe (20) oder der inneren Glasscheibe (30) angeordnet ist.

11. Verbundverglasung nach Anspruch 10, **dadurch gekennzeichnet, dass** das Stück (70), das ein Patch ausbildet, aus Polymermaterial besteht, beispielsweise aus einer Polyvinylbutyral (PVB)-Folie.

12. Verbundverglasung nach Anspruch 10 oder 11, **dadurch gekennzeichnet, dass** das Stück (70), das ein Patch ausbildet, eine Öffnung (78) aufweist, die konfiguriert ist, um an dem Befestigungsloch (18) ausgerichtet zu werden, das durch die Verbindungsmittel durchquert wird.

13. Verbundverglasung nach einem der Ansprüche 1 bis 12, **dadurch gekennzeichnet, dass** der mindestens eine Befestigungsteil (16) der Verglasung (10) mindestens die äußere Glasscheibe (20) aufweist, die nicht durch die Zwischenlage (40) und durch die innere Glasscheibe (30) bedeckt ist.

14. Verbundverglasung nach einem der Ansprüche 1 bis 12, **dadurch gekennzeichnet, dass** der mindestens eine Befestigungsteil (16) der Verglasung (10) mindestens die äußere Glasscheibe (20) und mindestens eine der Folien aufweist, die die Zwischenlage (40) ausbilden, die jeweils nicht durch die innere Glasscheibe (30) bedeckt sind.

15. Verbundverglasung nach einem der Ansprüche 1 bis 12, **dadurch gekennzeichnet, dass** der mindestens eine Teil (16) für die Befestigung der Verglasung die äußere Glasscheibe (20), die Zwischenlage (40) und die innere Glasscheibe (30) aufweist.

## Claims

1. Laminated glazing (10) for a motor vehicle, notably side glazing intended to be slidingly mounted in a door of the vehicle, said glazing (10) comprising at least one outer sheet of glass (20) and one inner sheet of glass (30) joined together by an interlayer (40) which comprises at least one sheet made of a polymer material, in which a visible zone (12) and a non-visible zone (14) of the glazing which extend on either side of a limit of visibility (LV) and comprising, in said non-visible zone (14) situated below the limit of visibility (LV), on the one hand, at least one fixing part (16) which comprises at least one fixing hole (18) which is intended to receive link means with a driving device of said glazing (10) and, on the other hand, at least one insert (50) which comprises an orifice (58) configured to be aligned with said fixing hole (18), **characterized in that** said insert (50) comprises at least one part (60) which is interposed between the interlayer (40) and an outer or inner one of said sheets (20, 30) of glass.

2. The laminated glazing as claimed in claim 1, **characterized in that** said at least one part (60) of the insert (50) extends in the non-visible zone (14) covered by the inner sheet of glass (30).

3. The laminated glazing as claimed in claim 1 or 2, **characterized in that** said at least one part (60) of the insert (50) is juxtaposed with the interlayer (40).

4. The laminated glazing as claimed in any one of claims 1 to 3, **characterized in that** said at least one part (60) of the insert (50) extends parallel to an inner face (24, 34) of an outer or inner one of said sheets of glass (20, 30).

5. The laminated glazing as claimed in any one of the preceding claims, **characterized in that** said at least one part (60) of the insert (50) comprises at least one aperture (62) so as to obtain, through said at least one part (60) of the insert (50), at least one fixing area (68) between the interlayer (40) and the outer sheet of glass (20) or the inner sheet of glass (30), directly or indirectly adjacent to the interlayer (40).

6. The laminated glazing as claimed in any one of the preceding claims, **characterized in that** said at least one part (60) of the insert (50) extending in the glazing, between the interlayer (40) and one of the outer or inner of said sheets of glass (20, 30), has a surface area which is greater than that of the opposite part (56) comprising said orifice (58).

7. The laminated glazing as claimed in any one of the preceding claims, **characterized in that** said at least one part (60) of the insert (50) has a thickness (e) of between 0.03 mm and 0.35 mm, preferably of between 0.05 mm and 0.2 mm.

8. The laminated glazing as claimed in any one of the preceding claims, **characterized in that** said insert (50) is made of plastic material, for example of polyethylene terephthalate (PET), or of metal, for example steel.

9. The laminated glazing as claimed in any one of the preceding claims, **characterized in that** the orifice (58) of said insert (50) is of circular form, said circular orifice (58) having a diameter which is greater than or equal to that of said fixing hole (18) passed through by said link means.

10. The laminated glazing as claimed in any one of the preceding claims, **characterized in that** at least one piece (70) forming a patch is interposed between the insert (50) and the outer sheet of glass (20) or the inner sheet of glass (30).

11. The laminated glazing as claimed in claim 10, **characterized in that** said piece (70) forming a patch is made of polymer material, for example a film of polyvinylbutyral (PVB).

12. The laminated glazing as claimed in claim 10 or 11, **characterized in that** said piece (70) forming a patch comprises an orifice (78) configured to be aligned with the fixing hole (18) passed through by said link means.

13. The laminated glazing as claimed in any one of claims 1 to 12, **characterized in that** said at least one fixing part (16) of the glazing (10) comprises at least the outer sheet of glass (20), not covered by the interlayer (40) and by the inner sheet of glass (30).

14. The laminated glazing as claimed in any one of claims 1 to 12, **characterized in that** said at least one fixing part (16) of the glazing (10) comprises at least the outer sheet of glass (20) and at least one of the sheets forming said interlayer (40), respectively not covered by the inner sheet of glass (30).

15. The laminated glazing as claimed in any one of claims 1 to 12, **characterized in that** said at least one fixing part (16) of the glazing comprises the outer sheet of glass (20), the interlayer (40) and the inner sheet of glass (30).
